# DEMANDE DE BREVET EUROPEEN

(11) **EP 4 124 578 A2**
(43) Date de publication de la demande: **01.02.2023**
(21) Numéro de dépôt: 22180609.4
(22) Date de dépôt: 23.06.2022
(51) Int. Cl.: B65B 5/04, B65B 5/06, B65B 7/06, B65B 23/00, B65B 31/06, B65B 51/14, B32B 15/09, B32B 15/098, B32B 15/20, B32B 27/08, B32B 27/32, B32B 27/36, B32B 27/42, H01C 7/102, H01C 7/12, H01T 4/06, B65D 85/30, B65D 33/16, B65D 81/20

(54) **PROCÉDÉ DE CONDITIONNEMENT SOUS VIDE OU SOUS GAZ INERTE D'ISOLATEURS ÉLECTRIQUES EN VERRE OU PORCELAINE REVÊTUS DE SILICONE**

(30) Priorité: 08.07.2021 FR 2107405
(71) Demandeur: Sediver, 92400 Courbevoie (FR)
(72) Inventeur: GUILLOT, Mylène, 63190 ORLEAT (FR); GOIGOUX, Thomas, 03200 ABREST (FR)
(74) Mandataire: IP Trust

(57) **Abrégé**

Procédé de conditionnement sous vide ou sous gaz inerte d'isolateurs électriques (4) pour haute tension ou très haute tension, tels que les isolateurs de lignes électriques réalisés avec un matériau diélectrique choisi parmi le verre ou la porcelaine et plus particulièrement les isolateurs électriques avec un revêtement en élastomère silicone hydrophobe protecteur recouvrant la surface des isolateurs électriques.

## Description

### Domaine technique

Le domaine de l'invention est celui du conditionnement des isolateurs électriques pour haute tension ou très haute tension, tels que les isolateurs de lignes électriques réalisés avec un matériau diélectrique choisi parmi le verre ou la porcelaine et plus particulièrement les isolateurs électriques avec un revêtement en élastomère silicone hydrophobe protecteur recouvrant la surface des isolateurs électriques.

### Technique antérieure

Il est connu de conditionner les isolateurs électriques sous forme unitaire ou sous forme de chaine d'isolateurs électriques dans des caisses en bois pour leur expédition et/ou leur stockage. Néanmoins, les frottements et/ou les chocs entre les isolateurs et le bois des caisses lors de la manutention des caisses peuvent entrainer une dégradation du revêtement silicone.

L'article "RTV Silicone Rubber Pre-coated Ceramic Insulators for Transmission Lines" par E. A. Cherney et al., IEEE Transaction on Dielectrics and electrical Insulation, Vol. 20, No 1; Février 2013, pages 237-244, décrit l'utilisation d'isolants céramiques pré-revêtus, leur emballage et leur transport.

Le document de brevet EP 1 323 642 A1 décrit un emballage absorbeur de choc et son utilisation, obtenu par scellement à chaud d'une feuille absorbeuse de choc et d'un film de résine thermoplastique.

Le document de brevet EP 3 299 304 B1 décrit un appareil d'aspiration pour mise sous vide de panneaux d'isolation sous vide ou pour la production de conditionnements sous vide.

Pour protéger les isolateurs électriques des frottements et/ou les chocs dans les caisses en bois, des protections en mousse ont été introduites dans les caisses de sorte à isoler les isolateurs électriques du bois des caisses.

Cependant, les caisses en bois contenant les isolateurs électriques et équipées avec des protections en mousse peuvent être stockées pendant de longues périodes sur des chantiers avant l'installation des isolateurs électriques. Ces chantiers pouvant se situer dans des zones soumises à des conditions extérieures critiques comme de fortes pluies, des inondations, ou en contact avec des eaux stagnantes, de l'humidité est absorbée par les mousses de protection. Lorsque les mousses sont mouillées, leur humidité en contact prolongé avec les isolateurs électriques peut générer un décollement du revêtement silicone entrainant une dégradation des isolateurs électriques avant leur installation. La dégradation du revêtement silicone se produit également lorsque les isolateurs électriques sont en contact direct et prolongé avec de l'eau stagnante.

Les fabricants d'isolateurs électriques sont ainsi demandeur d'un procédé de conditionnement des isolateurs électriques permettant de palier à ces inconvénients.

### Exposé de l'invention

Le but de l'invention est de proposer un procédé de conditionnement d'isolateurs électriques en verre ou porcelaine avec un revêtement silicone qui permettent de mieux protéger les isolateurs électriques des chocs et/ou frottements lors de la manutention des caisses contenant les isolateurs électriques, tout en limitant l'humidité ambiante et la formation de condensation qui entrent en contact avec les isolateurs électriques lors de leur stockage.

A cet effet, l'invention a pour objet un procédé de conditionnement d'isolateurs électriques en verre ou porcelaine avec revêtement silicone comprenant les étapes suivantes :
- insérer un isolateur électrique ou une chaine d'isolateurs électriques à l'intérieur d'une poche à sceller étanche à l'eau et à l'air par une portion ouverte de la poche, la portion ouverte de la poche étant délimitée par deux bords à sceller l'un contre l'autre pour créer une bande de scellement et fermer hermétiquement la poche,
- superposer les deux bords pour former la bande de scellement et positionner la bande de scellement entre deux barres de soudure d'une machine à sceller,
- introduire une première extrémité d'une buse d'aspiration d'air entre les deux bords à sceller de la poche,
- fermer les barres de soudure de sorte à maintenir la première extrémité de la buse d'aspiration entre les deux bords à sceller et à pincer la bande de scellement,
- appliquer une source de vide à une deuxième extrémité de la buse d'aspiration jusqu'à un certain niveau de vide,
- le certain niveau de vide atteint, retirer la buse d'aspiration d'air maintenue entre les deux bords de la poche et appliquer un scellage par soudure sur la bande de scellement.

Le procédé selon l'invention peut présenter les particularités suivantes :
- la première extrémité de la buse peut être aplatie ;
- le matériau multicouche de la poche peut être en polytéréphtalate d'éthylène (PET) / aluminium / phtalaldéhyde (OPA) / polyéthylène (PE) ;
- le matériau multicouche de la poche peut être recyclable ou biodégradable ;
- un gaz inerte peut être introduit dans la poche exempte d'air avant le scellage par soudure de la bande de scellement.

Avantageusement, l'isolateur électrique, ou la chaine d'isolateurs électriques, conditionné sous vide dans une poche étanche à l'eau et à l'air peut être conservé dans tous types de zones de stockage et restera protégé hermétiquement de toute humidité environnante avant utilisation, assurant ainsi une bonne intégrité du revêtement silicone de l'isolateur électrique.

Ce procédé de conditionnement est d'autant plus avantageux que la poche, formant un emballage primaire, est mécaniquement résistante à la manutention et au transport, ce qui permet aussi de protéger l'isolateur électrique des chocs et/ou des frottements avec d'autres matériaux formant un emballage secondaire tel une caisse en bois.

La forme aplatie de la première extrémité de la buse d'aspiration améliore son maintient correct entre les bords à sceller de la poche et favorise l'étanchéité de la bande de scellement lors de l'aspiration de l'air contenu dans la poche vu que les barres de soudure de la machine à sceller qui sont généralement équipées d'un ruban téflon ou caoutchouc épouseront mieux la forme aplatie de l'extrémité de la buse.

Dans certains cas, un gaz inerte pourrait être avantageusement introduit dans la poche exempte d'air de sorte à améliorer les conditions de stockage et de conservation d'un isolateur électrique avec revêtement silicone.

### Description sommaire des dessins

La présente invention sera mieux comprise et d'autres avantages apparaîtront à la lecture de la description qui suit et des dessins annexés dans lesquels :
- la figure 1 montre de façon très schématique une chaine d'isolateurs électriques pour ligne électrique ; la figure 2 montre de façon très schématique une succession de plusieurs isolateurs électriques de la chaine d'isolateurs électriques à conditionner selon l'invention ;
- la figure 3 illustre les différentes étapes du conditionnement du procédé selon l'invention ;
- la figure 4 illustre de façon très schématique une machine à sceller pour le conditionnement de un ou plusieurs isolateurs électriques dans une poche à sceller ;
- la figure 5A et la figure 5B montrent de façon très schématique une chaine d'isolateurs électrique conditionnée sous vide ou sous gaz inerte dans une poche à sceller, vue de face à la figure 5A et de profil à la figure 5B.

### Description des modes de réalisation

Le procédé de conditionnement selon l'invention s'applique à des composants en un matériau diélectrique choisi parmi le verre ou la porcelaine, plus particulièrement des composants électrotechniques isolants électriquement comme des isolateurs électriques pour haute et très haute tension.

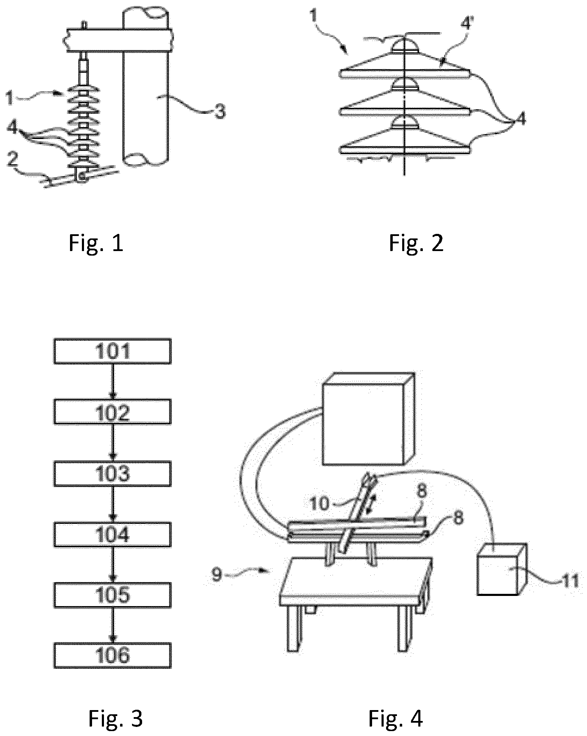

La figure 1 illustre à titre d'exemple une chaine 1 d'isolateurs électriques 4 pour ligne électrique 2 à haute ou très haute tension en suspension sur un pylône 3 et la figure 2 montre une succession de plusieurs isolateurs électriques 4 de la chaine 1 illustrée sur la figure 1 qui peuvent être par exemple des isolateurs électriques 4 à jupe réalisée en verre trempé et dont la surface extérieure 4' est revêtue d'une protection à base de silicone. Un tel revêtement silicone de la jupe, lorsqu'il est en contact prolongé et récurrent avec de l'humidité lors d'un stockage prolongé par exemple a tendance à se dégrader par décollement du revêtement silicone de la jupe.

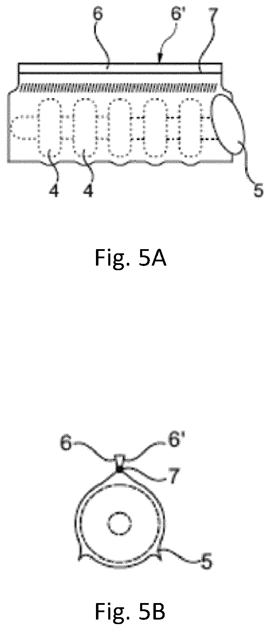

Selon le procédé de conditionnement de l'invention illustré par un diagramme sur la figure 3, un ou plusieurs isolateurs électriques en verre ou porcelaine avec revêtement silicone sont conditionnés sous vide ou sous gaz inerte dans une poche 5, visible sur les figures 5A et 5B. Cette poche 5 est étanche à l'eau et à l'air et la poche 5 présente également une résistance mécanique de sorte à protéger le ou les isolateurs électriques des chocs et/ou frottements avec d'autres matériaux lors de la manutention et/ou du transport du ou des isolateurs électriques. La poche 5 est aussi soudable de sorte à pouvoir la fermer hermétiquement.

La poche 5 peut être de tout matériau connu comme étanche à l'eau et à l'air et mécaniquement résistante, et préférablement un matériau multicouche en polytéréphtalate d'éthylène (PET) / aluminium / phtalaldéhyde (OPA) / polyéthylène (PE) qui a montré des résultats satisfaisants de conservation du revêtement silicone des isolateurs électriques 4 dans des zones de stockage humides. Une poche 5 en un matériau multicouche recyclable ou biodégradable étanche à l'eau et à l'air peut être de préférence utilisée.

Le procédé de conditionnement de l'invention s'applique à un isolateur électrique 4 mais à également une chaine 1 d'isolateurs électriques 4 qui a une longueur généralement comprise entre 1 mètre et 1,5 mètre, voir plus.

Selon l'invention, le procédé comprend une première étape 101 dans laquelle un isolateur électrique 4 (ou une chaine 1 d'isolateurs électriques 4) est inséré à l'intérieur de la poche 5 par une portion ouverte (non illustrée) de la poche 5, la portion ouverte étant délimitée par deux bords 6, 6' à sceller l'un contre l'autre pour pouvoir créer une bande de scellement 7, qui après scellage, fermera hermétiquement la poche 5.

Une fois l'isolateur électrique 4 inséré dans la poche 5, une seconde étape 102 consiste à superposer les deux bords 6, 6' de la portion ouverte de la poche 5 pour former la bande de scellement 7 qui dépasse de la poche 5 afin de pouvoir la positionner entre deux barres de soudure 8 d'une machine à sceller 9 illustrée à la figure 4.

Avant de fermer hermétiquement la poche 5, il faut retirer l'air qui se trouverait dans la poche 5 à l'aide d'une buse d'aspiration 10 d'air connectée à une source de vide 11 tel que par exemple une pompe à vide. Pour cela, une première extrémité de la buse d'aspiration 10 est introduite à l'étape 103 entre les deux bords 6, 6' à sceller de la poche 5, la deuxième extrémité la buse d'aspiration 10 étant reliée à la source de vide 11.

Puis à l'étape 104, les deux barres de soudure 8 se rapprochent l'une de l'autre de sorte que lorsqu'elles sont fermées l'une contre l'autre, elles maintiennent la première extrémité de la buse d'aspiration 10 entre les deux bords 6, 6' et elles pincent par pression les deux bords 6, 6' au niveau de la bande de scellement 7.

La poche 5 étant ainsi fermée par pression, la source de vide 11 est activée à l'étape 105 jusqu'à atteindre un certain niveau de vide contrôlable.

Lorsque le certain niveau de vide souhaité est atteint, à l'étape 106, la buse d'aspiration 10 est extraite en étant retirée au niveau de la bande de scellement 7, un scellage par soudure étant appliqué sur cette dernière avant de libérer la poche 5 scellée sous vide visible aux figure 5A et figure 5B, par ouverture des barres de soudure 8.

Dans un mode de réalisation particulier, la buse d'aspiration 10 peut avoir au moins la première extrémité aplatie de sorte que la forme aplatie soit plus facile à épouser par un joint souple agencé sur chaque barre de soudure 8 et ainsi permettre une meilleure étanchéité lors de l'aspiration de l'air dans la poche 5.

Dans un autre mode de réalisation, lorsque le certain niveau de vide est atteint, un gaz inerte pourrait être introduit par tout moyen connu, introduit par exemple à travers la bande de scellement 7 parallèlement à la buse d'aspiration 10 d'air, dans la poche 5 exempte d'air avant le scellage par soudure de la bande de scellement 7.

Il va de soi que la présente invention ne saurait être limitée au mode de réalisation exposé plus haut, susceptible de subir des modifications sans pour autant sortir du cadre de l'invention.

## Revendications

1. Procédé de conditionnement d'isolateur électrique (4) en verre ou porcelaine avec revêtement silicone comprenant les étapes suivantes :
- insérer un isolateur électrique (4) ou une chaine (1) d'isolateurs électriques (4) à l'intérieur d'une poche (5) à sceller en matériau multicouche étanche à l'eau et à l'air par une portion ouverte de ladite poche (5), ladite portion ouverte de ladite poche (5) étant délimitée par deux bords (6, 6') à sceller l'un contre l'autre pour créer une bande de scellement (7) destinée à fermer hermétiquement ladite poche (5),
- superposer lesdits deux bords (6, 6') pour former ladite bande de scellement (7) et positionner ladite bande de scellement (7) entre deux barres de soudure (8) d'une machine à sceller (9),
- introduire une première extrémité d'une buse d'aspiration (10) d'air entre lesdits deux bords (6, 6') à sceller de ladite poche (5),
- fermer lesdites barres de soudure (8) de sorte à maintenir ladite première extrémité de ladite buse d'aspiration (10) entre lesdits deux bords (6, 6') à sceller et à pincer ladite bande de scellement (7),
- appliquer une source de vide (11) à une deuxième extrémité de ladite buse d'aspiration (10) jusqu'à un certain niveau de vide,
- ledit certain niveau de vide atteint, retirer ladite extrémité de ladite buse d'aspiration (10) d'air maintenue entre lesdits deux bords (6, 6') de ladite poche (5) et appliquer un scellage par soudure sur ladite bande de scellement (7).

2. Procédé selon la revendication 1, **caractérisé en ce que** ladite première extrémité de ladite buse d'aspiration (10) est de préférence aplatie.

3. Procédé selon la revendication 1 ou 2, **caractérisé en ce que** ledit matériau multicouche de ladite poche (5) est en polytéréphtalate d'éthylène (PET) / aluminium / phtalaldéhyde (OPA) / polyéthylène (PE).

4. Procédé selon la revendication 1 ou 2, **caractérisé en ce que** ledit matériau multicouche de ladite poche (5) est recyclable ou biodégradable.

5. Procédé selon l'une des revendications précédentes, **caractérisé en ce qu'**un gaz inerte est introduit dans ladite poche (5) exempte d'air avant ledit scellage par soudure de ladite bande de scellement (7).
